# FASCICULE DE BREVET EUROPEEN

(11) **EP 3 311 718 B1**
(45) Date de publication et mention de la délivrance du brevet: **17.07.2019**
(21) Numéro de dépôt: 17197779.6
(22) Date de dépôt: 23.10.2017
(51) Int. Cl.: A47J 43/07, A47J 27/00, A47J 36/06

(54) **APPAREIL ÉLECTROMÉNAGER DE PRÉPARATION CULINAIRE CHAUFFANT COMPORTANT UN JOINT ANNULAIRE**
BEHEIZBARES ELEKTROHAUSHALTSGERÄT ZUR ESSENSZUBEREITUNG, DAS EINE RINGDICHTUNG UMFASST
HEATING ELECTRICAL KITCHEN APPLIANCE COMPRISING AN ANNULAR SEAL

(30) Priorité: 24.10.2016 FR 1660291
(43) Date de publication de la demande: 25.04.2018
(73) Titulaire: SEB S.A., 69130 Ecully (FR)
(72) Inventeur: CHARLES, Patrick, 65290 LOUEY (FR); PAUMARD, Jonathan, 53470 MARTIGNE SUR MAYENNE (FR); NESPOUX, Johan, 53640 LE HORPS (FR)
(74) Mandataire: Bourrières, Patrice

(56) Documents cités:
- WO-A1-00/30515
- CN-U- 204 950 672
- FR-A1- 2 756 477
- FR-A1- 2 855 738

## Description

La présente invention concerne le domaine technique des appareils électroménagers de préparation culinaire chauffants comportant un récipient de travail, un accessoire de travail rotatif agencé dans le récipient de travail, et un boîtier motorisé supérieur disposé au dessus du récipient de travail pour entraîner en rotation l'accessoire de travail rotatif selon un axe de rotation, le boîtier motorisé supérieur étant verrouillé sur le récipient de travail.

La présente invention concerne plus particulièrement les appareils du type précité comportant un joint annulaire venant en appui à l'intérieur du récipient de travail.

Il est connu du document CN204950672U un appareil du type précité, dans lequel le joint annulaire est disposé entre un bord supérieur du récipient de travail et une partie inférieure du boîtier motorisé supérieur. Le joint annulaire vient en appui périphérique à l'intérieur du récipient de travail. Le joint annulaire comporte deux lèvres superposées agencées en dessous d'une collerette portée par le récipient de travail. Toutefois ce document ne décrit pas de dispositif d'évacuation en cas de surpression à l'intérieur de l'enceinte de travail.

Un objet de la présente invention est de proposer un appareil électroménager de préparation culinaire chauffant du type précité, qui présente une construction simple et fiable permettant d'éviter les surpressions à l'intérieur de l'enceinte de travail.

Cet objet est atteint avec un appareil électroménager de préparation culinaire chauffant comportant un récipient de travail, un accessoire de travail rotatif disposé dans le récipient de travail, un boîtier motorisé supérieur pour entraîner en rotation l'accessoire de travail rotatif selon un axe de rotation, un dispositif de chauffe électrique pour chauffer les aliments contenus dans le récipient de travail, un joint annulaire comportant une lèvre annulaire venant en appui périphérique à l'intérieur du récipient de travail, le boîtier motorisé supérieur étant verrouillé sur le récipient de travail, du fait que le récipient de travail porte un couvercle intermédiaire comportant un corps, qu'une enceinte de travail est définie par le récipient de travail et le couvercle intermédiaire, que le joint annulaire est monté autour du corps entre une bordure d'appui inférieure et une bordure d'appui supérieure, et que la bordure d'appui inférieure et/ou la bordure d'appui supérieure présente(nt) une échancrure latérale autorisant une torsion d'une portion du joint annulaire dans l'échancrure latérale pour créer une fuite hors de l'enceinte de travail en cas de surpression à l'intérieur de l'enceinte de travail.

Une telle construction permet de réaliser une fuite hors de l'enceinte de travail en cas de montée en pression dans l'enceinte de travail. La pression régnant dans l'enceinte de travail soulève le boîtier motorisé supérieur.

Avantageusement alors, ladite portion du joint annulaire est agencée entre l'échancrure latérale et un échappement vers l'extérieur de l'appareil.

Cette disposition permet de faciliter la réalisation de la fuite hors de l'enceinte de travail.

Avantageusement alors, l'échappement est ménagé entre le récipient de travail et le couvercle intermédiaire.

Cette disposition permet de simplifier la construction de l'appareil.

Avantageusement encore, le récipient de travail présente un bord supérieur présentant un décrochement supérieur ménageant l'échappement.

Cette disposition permet de faciliter le versement hors du récipient de travail. Si désiré, le décrochement supérieur peut former un bec verseur. En alternative ou en complément, le bord supérieur peut présenter un bec verseur ménageant l'échappement.

Avantageusement encore, la bordure d'appui inférieure et/ou la bordure d'appui supérieure présente une autre échancrure latérale autorisant une torsion d'une autre portion du joint annulaire dans l'autre échancrure latérale pour créer une autre fuite hors de l'enceinte de travail en cas de surpression à l'intérieur de l'enceinte de travail.

Cette disposition permet d'améliorer encore la sécurité à la surpression.

Avantageusement alors, l'autre échancrure latérale est disposée à l'opposé de l'échancrure latérale par rapport à l'axe de rotation.

Cette disposition permet de faciliter la déformation du joint annulaire.

Avantageusement encore, le joint annulaire comporte une autre lèvre annulaire s'étendant au dessus de la lèvre annulaire.

Cette disposition permet de faciliter la mise en place du joint annulaire. Cette disposition contribue ainsi à l'obtention d'une bonne étanchéité entre le récipient de travail et le couvercle intermédiaire.

Avantageusement encore, le couvercle intermédiaire présente un conduit d'évacuation mettant en communication l'enceinte de travail avec l'extérieur de l'appareil.

Cette disposition permet de mieux contrôler l'évacuation des vapeurs hors de l'enceinte de travail.

Avantageusement alors, le conduit d'évacuation comporte une admission communiquant avec l'enceinte de travail et une évacuation communiquant avec l'extérieur de l'appareil, et l'évacuation débouche au dessus du joint annulaire.

Selon un mode de réalisation, l'appareil comporte une base recevant le récipient de travail.

Avantageusement alors, le dispositif de chauffe électrique est porté par le récipient de travail et la base comporte un connecteur électrique de chauffe pour alimenter électriquement le dispositif de chauffe électrique lorsque le récipient de travail est disposé sur la base. En alternative, le dispositif de chauffe électrique pourrait notamment être porté par la base.

Avantageusement encore, la base comporte un montant présentant un connecteur électrique de motorisation pour alimenter électriquement le boîtier motorisé supérieur.

Avantageusement alors, le décrochement supérieur est adjacent au montant.

Avantageusement encore, le décrochement supérieur s'étend de part et d'autre du montant.

L'échappement est ainsi formé par deux passages ménagés de part et d'autre du montant.

Avantageusement encore, le couvercle intermédiaire porte un organe de transmission rotatif entrainé en rotation par le boîtier motorisé supérieur et entraînant en rotation l'accessoire de travail rotatif disposé dans le récipient de travail.

Cette disposition permet de mieux protéger le boîtier motorisé supérieur des projections de matières alimentaires, de liquides et/ou de vapeur.

Avantageusement encore, le récipient de travail présente un fond et comporte un organe de centrage s'élevant à partir du fond, et l'accessoire de travail rotatif est monté sur l'organe de centrage.

L'invention sera mieux comprise à l'étude d'un exemple de réalisation et d'une variante, pris à titre nullement limitatif, illustrés dans les figures annexées, dans lesquelles :
- la figure 1 est une vue en perspective et en éclaté d'un exemple de réalisation d'un appareil électroménager de préparation culinaire selon l'invention,
- la figure 2 est une vue en coupe verticale de l'appareil électroménager de préparation culinaire illustré sur la figure 1, dans une configuration de rangement,
- la figure 3 est une vue en coupe verticale de l'appareil électroménager de préparation culinaire illustré sur la figure 1, dans une configuration d'utilisation, la base n'étant pas représentée,
- la figure 4 est une vue en élévation de l'appareil électroménager de préparation culinaire illustré sur la figure 1, dans une configuration assemblée,
- les figures 5 et 6 sont deux vues en perspective de côté et de dessus de la base de l'appareil électroménager de préparation culinaire illustré sur la figure 1,
- les figures 7 et 8 sont deux vues en perspective de côté et de dessous du récipient de travail de l'appareil électroménager de préparation culinaire illustré sur la figure 1,
- les figures 9 à 13 sont des vues en perspective de dessus, de dessous et de côté du couvercle intermédiaire de l'appareil électroménager de préparation culinaire illustré sur la figure 1,
- la figure 14 est une vue de dessus du récipient de travail illustré sur les figures 7 et 8 portant le couvercle intermédiaire illustré sur les figures 9 à 13,
- la figure 15 est une vue partielle en élévation et en coupe du récipient de travail illustré sur les figures 7 et 8 portant le couvercle intermédiaire illustré sur les figures 9 à 13, selon une première orientation,
- la figure 16 est une vue en élévation et en coupe du récipient de travail illustré sur les figures 7 et 8 portant le couvercle intermédiaire illustré sur les figures 9 à 13, selon une deuxième orientation,
- les figures 17 et 18 sont des vues en perspective de dessous et de dessus du boîtier motorisé supérieur de l'appareil électroménager de préparation culinaire illustré sur la figure 1 ;
- la figure 19 est une variante de réalisation du couvercle intermédiaire illustré sur les figures 9 à 13,
- la figure 20 est une variante de réalisation de l'appareil illustré sur les figures 1 à 18, comportant le couvercle intermédiaire illustré sur la figure 19.

L'appareil électroménager de préparation culinaire illustré sur les figures comporte une base 1, un récipient de travail 2, un couvercle intermédiaire 3, un boîtier motorisé supérieur 4, ainsi que des accessoires de préparation 5.

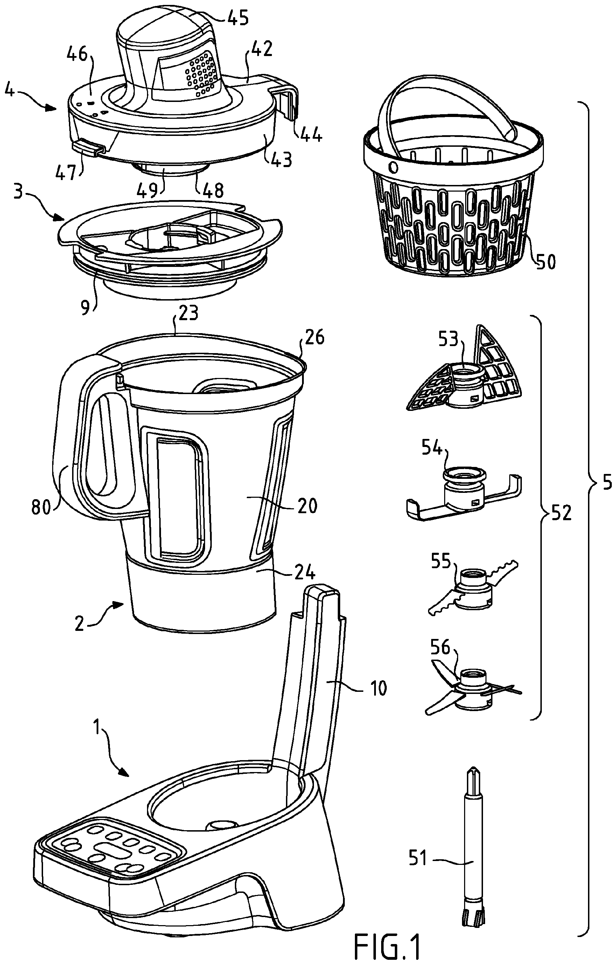

Tel que représenté sur la figure 1, les accessoires de préparation 5 comprennent un panier vapeur 50, un moyeu 51, et des outils de travail rotatifs 52 interchangeables. Les outils de travail rotatifs 52 comprennent un outil émulsionneur 53, un outil de mélange 54, un outil couteau denté 55 et un outil couteau coupant 56.

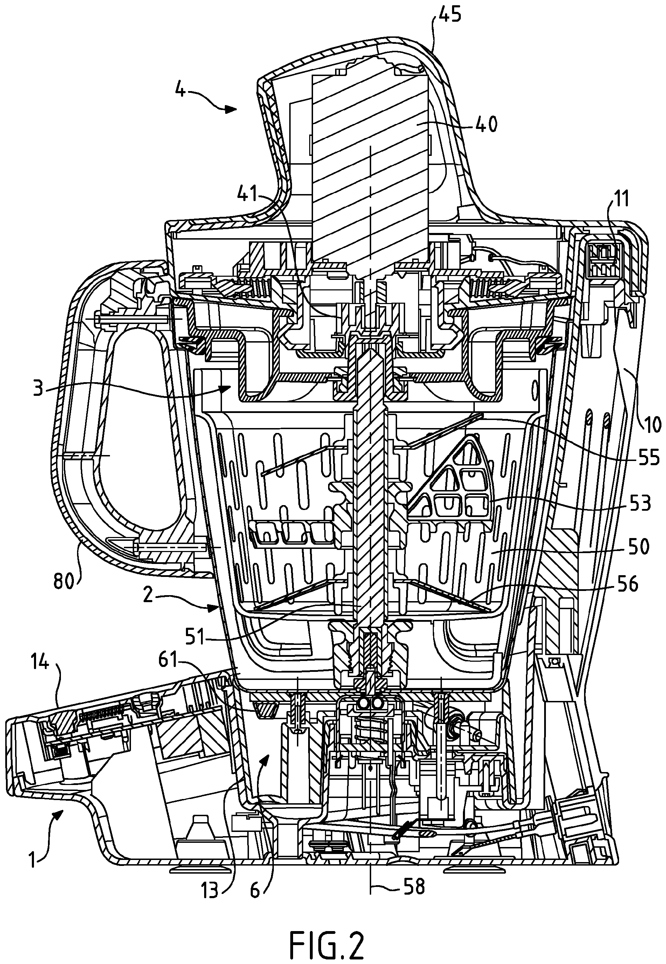

Les accessoires de préparation 5 peuvent être rangés dans le récipient de travail 2, tel que montré sur la figure 2.

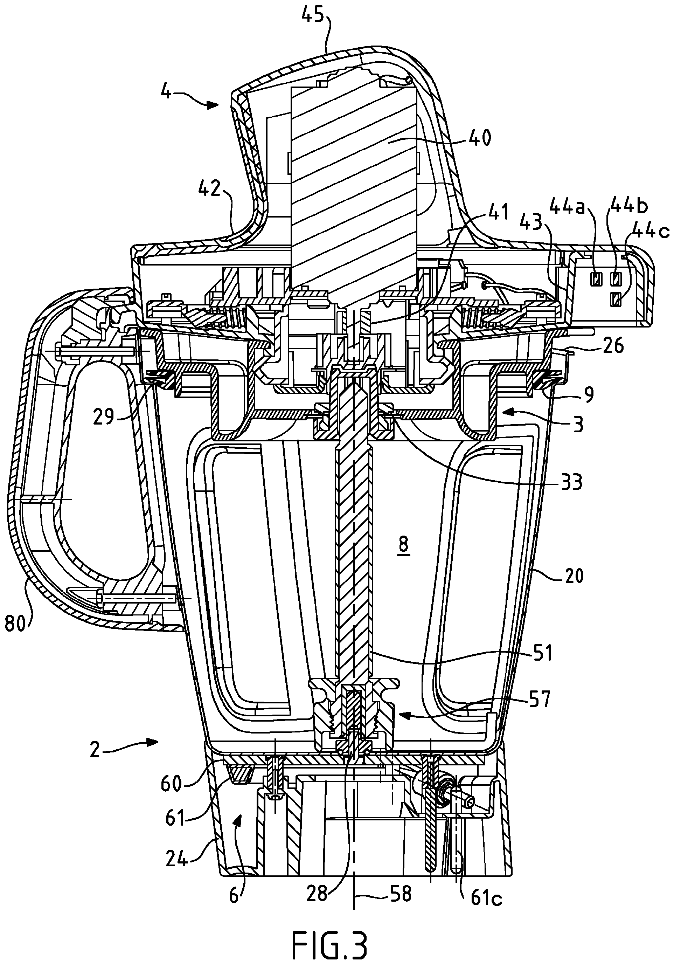

En configuration d'utilisation, l'appareil électroménager de préparation culinaire comporte un accessoire de travail rotatif 57 disposé dans le récipient de travail 2, tel que montré sur la figure 3. Le boîtier motorisé supérieur 4 est disposé sur le récipient de travail 2 pour entraîner en rotation l'accessoire de travail rotatif 57 selon un axe de rotation 58.

Dans l'exemple de réalisation illustré sur les figures, chacun des outils de travail rotatifs 52 peut être monté sur le moyeu 51 pour former l'accessoire de travail rotatif 57.

Le récipient de travail 2 présente un fond 25. Le récipient de travail 2 comporte un organe de centrage 28 s'élevant à partir du fond 25. Tel que visible sur la figure 3, l'accessoire de travail rotatif 57 est monté sur l'organe de centrage 28.

Le récipient de travail 2 porte le couvercle intermédiaire 3. Le couvercle intermédiaire 3 comprend un joint annulaire 9, mieux visible sur la figure 3. Le joint annulaire 9 vient en appui périphérique à l'intérieur du récipient de travail 2.

L'appareil électroménager de préparation culinaire selon l'invention comprend une enceinte de travail 8 définie par le récipient de travail 2 et le couvercle intermédiaire 3.

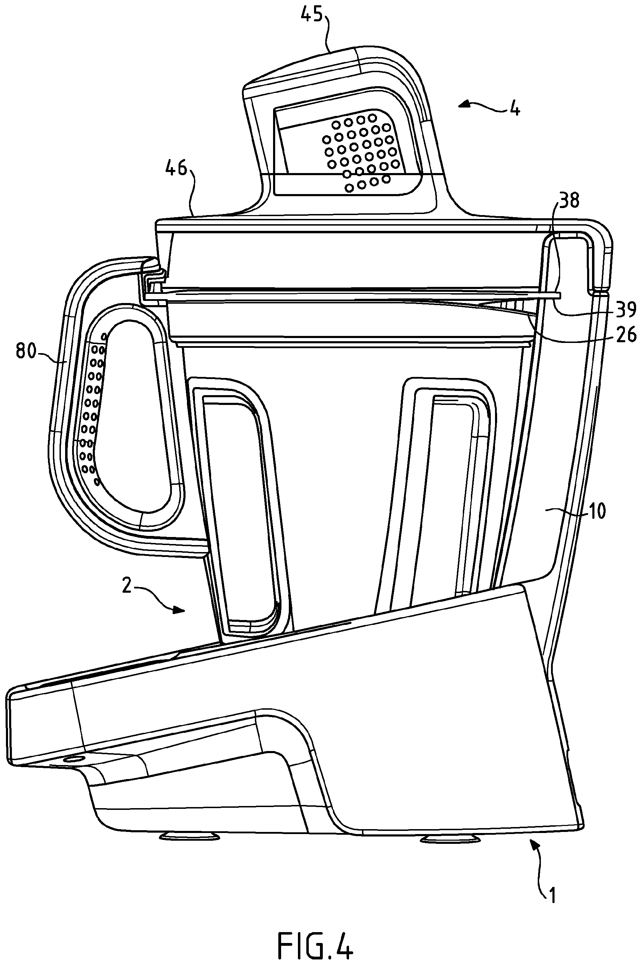

Le boîtier motorisé supérieur 4 est disposé sur le couvercle intermédiaire 3. La base 1 reçoit le récipient de travail 2, tel que montré sur la figure 4.

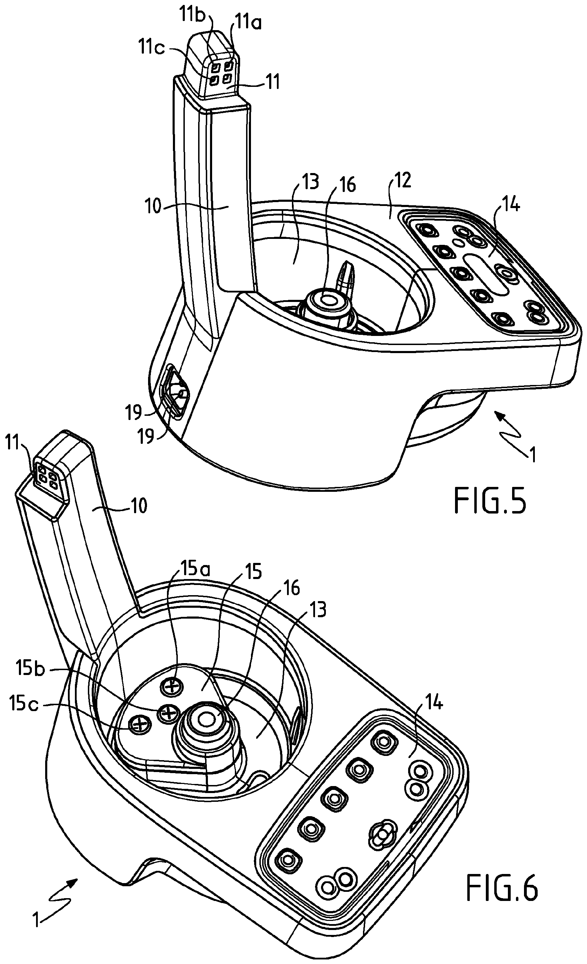

La base 1 comporte un montant 10, mieux visible sur les figures 5 et 6. Le montant 10 présente un connecteur électrique de motorisation 11 pour alimenter le boîtier motorisé supérieur 4. Le connecteur électrique de motorisation 11 est agencé latéralement dans le montant 10. Le connecteur électrique de motorisation 11 comporte trois douilles latérales 11a, 11b, 11c disposées dans une paroi latérale de la partie supérieure du montant 10. Les douilles latérales 11a, 11b, 11c présentent une entrée latérale agencée tangentiellement par rapport à l'axe de rotation 58.

La base 1 forme un socle 12 recevant le récipient de travail 2. A cet effet la base 1 présente une empreinte 13 ménagée dans le socle 12 pour recevoir la partie inférieure du récipient de travail 2. La base 1 présente un tableau de commande 14 disposé sur le socle 12. La partie supérieure du socle 12 est relevée en direction du montant 10. La partie supérieure du socle 12 est plane et entoure l'empreinte 13. Le montant 10 est agencé à l'opposé du tableau de commande 14 par rapport à l'empreinte 13.

L'appareil électroménager de préparation culinaire selon l'invention comporte un dispositif de chauffe électrique 6 pour chauffer les aliments contenus dans le récipient de travail 2.

Dans l'exemple de réalisation illustré sur les figures, le dispositif de chauffe électrique 6 est porté par le récipient de travail 2. Le récipient de travail 2 est monté amovible sur la base 1. A cet effet, la base 1 comporte un connecteur électrique de chauffe 15, mieux visible sur la figure 6, pour alimenter le dispositif de chauffe électrique 6 lorsque le récipient de travail 2 est disposé sur la base 1. Le connecteur électrique de chauffe 15 comporte trois douilles supérieures 15a, 15b, 15c disposées dans l'empreinte 13. Les douilles supérieures 15a, 15b, 15c présentent une entrée supérieure agencée parallèlement à l'axe de rotation 58.

La base 1 comporte également un dispositif de contrôle de température comportant un capteur 16 prévu pour venir en contact avec le récipient de travail 2 disposé sur la base 1. Plus particulièrement dans l'exemple de réalisation illustré sur les figures, le capteur 16 est agencé dans l'empreinte 13. La base 1 présente des broches d'alimentation 19, visibles sur la figure 5, prévues pour recevoir un cordon d'alimentation électrique, non représenté.

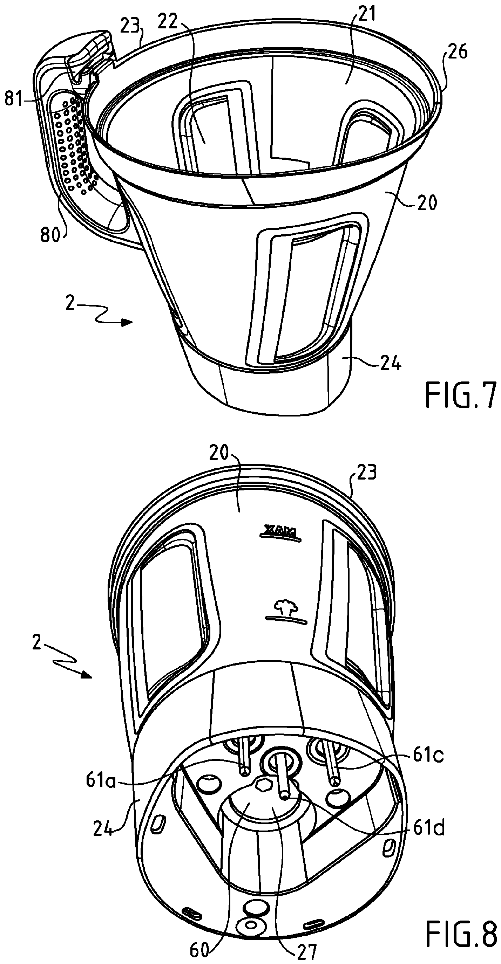

Le récipient de travail 2 illustré sur les figures 7 et 8 comporte un réceptacle 20 présentant une paroi latérale intérieure 21. Le réceptacle 20 est avantageusement réalisé en métal, de préférence en acier inoxydable. La paroi latérale intérieure 21 comporte des nervures internes 22. Le récipient de travail 2 présente un bord supérieur 23. Le bord supérieur 23 du récipient de travail 2 présente un décrochement supérieur 26, mieux visible sur la figure 3. Le récipient de travail 2 comporte une poignée 80. La poignée 80 est montée sur le réceptacle 20. Le décrochement supérieur 26 est agencé à l'opposé de la poignée 80.

Le récipient de travail 2 comporte une plaque de diffusion thermique 60 agencée sous le réceptacle 20. La plaque de diffusion thermique 60 est avantageusement réalisée en aluminium. Le récipient de travail 2 comporte une embase 24 prévue pour reposer sur la base 1. L'embase 24 est montée sous le réceptacle 20. Tel que représenté sur la figure 2, l'embase 24 est engagée dans l'empreinte 13 lorsque le récipient de travail 2 est en place sur la base 1. La paroi latérale intérieure 21 présente un décrochement annulaire 29.

Dans l'exemple de réalisation illustré sur les figures, le dispositif de chauffe électrique 6 est formé par un élément chauffant blindé 61 fixé sous la plaque de diffusion thermique 60. La plaque de diffusion thermique 60 est agencée sous le réceptacle 20. Tel que visible sur la figure 8, trois broches inférieures 61a, 61b, 61c sont issues de l'embase 24. Deux des broches inférieures 61a, 61b, 61c sont reliées aux bornes de l'élément chauffant blindé 61 et la troisième formant la terre est reliée au réceptacle 20 et/ou à la plaque de diffusion thermique 60.

Tel que visible sur les figures 3 et 8, l'embase 24 présente une ouverture 27 laissant apparaître le fond 25. L'ouverture 27 est prévue pour le passage du capteur 16. Tel que visible sur la figure 2, le capteur 16 vient en contact avec le fond 25 du récipient de travail 2. Le capteur 16 est agencé en position centrale par rapport au fond 25 du récipient de travail 2. L'axe de rotation 58 passe par le capteur 16.

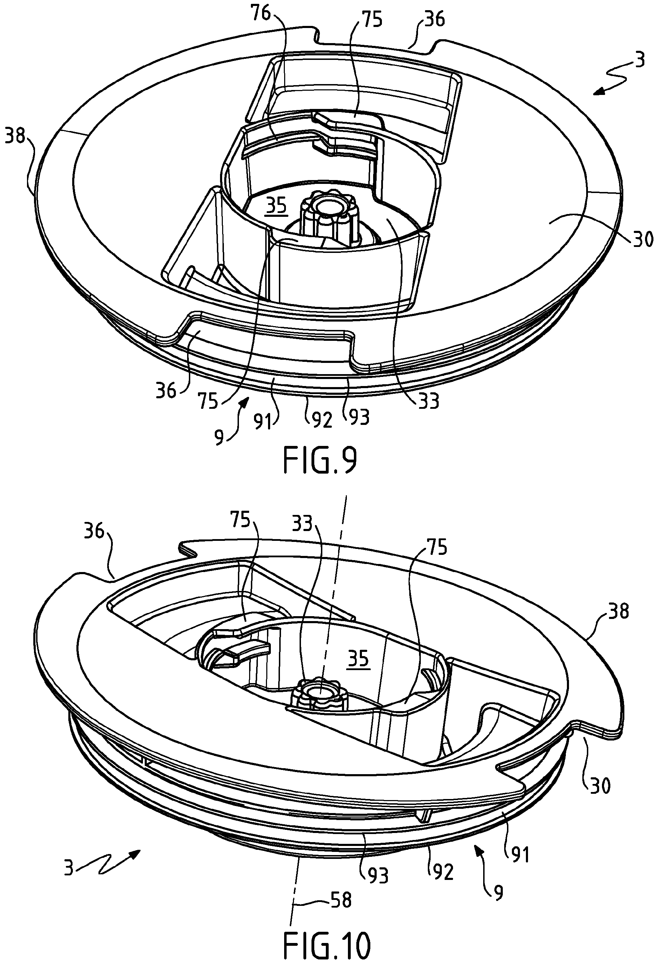

Le couvercle intermédiaire 3 comporte un corps 30 s'étendant autour de l'axe de rotation 58, tel que représenté sur les figures 9 et 10. Le corps 30 présente un logement central 35 s'étendant autour de l'axe de rotation 58. Le logement central 35 présente deux collerettes internes 75 prévues pour un verrouillage par baïonnette avec le boîtier motorisé supérieur 4. Le couvercle intermédiaire 3 présente deux organes de retenue 76 agencés dans le logement central 35. Les organes de retenue 76 et les collerettes internes 75 sont agencés de manière opposée. Les organes de retenue 76 sont décalés axialement et latéralement par rapport aux collerettes internes 75.

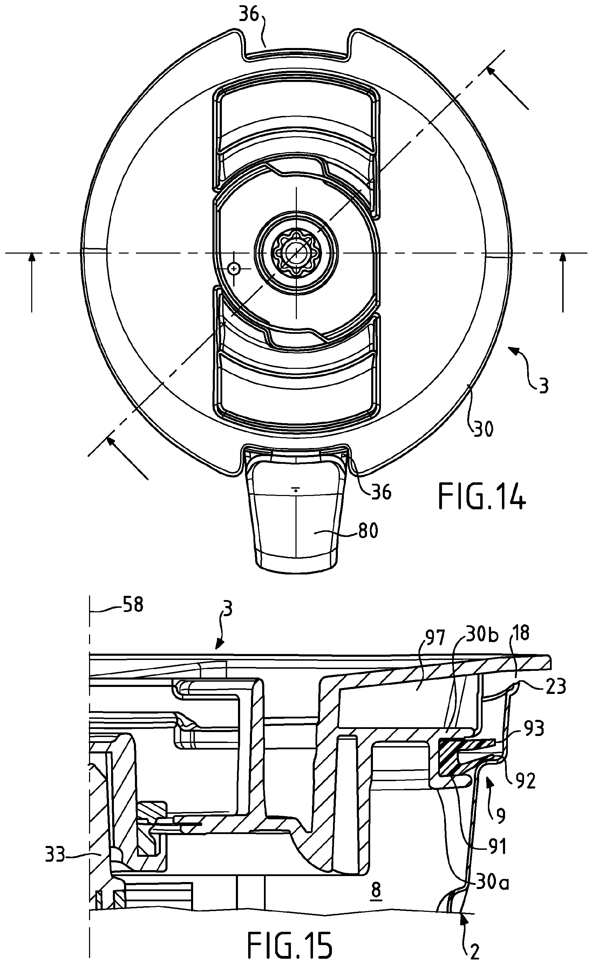

Le couvercle intermédiaire 3 est bloqué en rotation par rapport au récipient de travail 2. A cet effet le corps 30 présente deux échancrures périphériques 36. L'une des échancrures périphériques 36 reçoit la poignée 80, tel que montré sur la figure 14, et l'autre reçoit le montant 10. De préférence chacune des échancrures périphériques 36 est prévue pour recevoir indifféremment la poignée 80 ou le montant 10.

Le couvercle intermédiaire 3 comporte une bordure extérieure 38 présentant une partie inférieure 39 apparente lorsque le boîtier motorisé supérieur 4 est disposé sur le couvercle intermédiaire 3.

Selon une forme de réalisation préférée, le couvercle intermédiaire 3 porte un organe de transmission rotatif 33. Tel que montré sur la figure 3, l'organe de transmission rotatif 33 est entrainé en rotation par le boîtier motorisé supérieur 4 et entraîne en rotation l'accessoire de travail rotatif 57 disposé dans le récipient de travail 2. Le logement central 35 entoure l'organe de transmission rotatif 33. A titre de variante, le boîtier motorisé supérieur 4 pourrait directement entraîner en rotation l'accessoire de travail rotatif 57, le couvercle intermédiaire 3 présentant alors un passage axial libre.

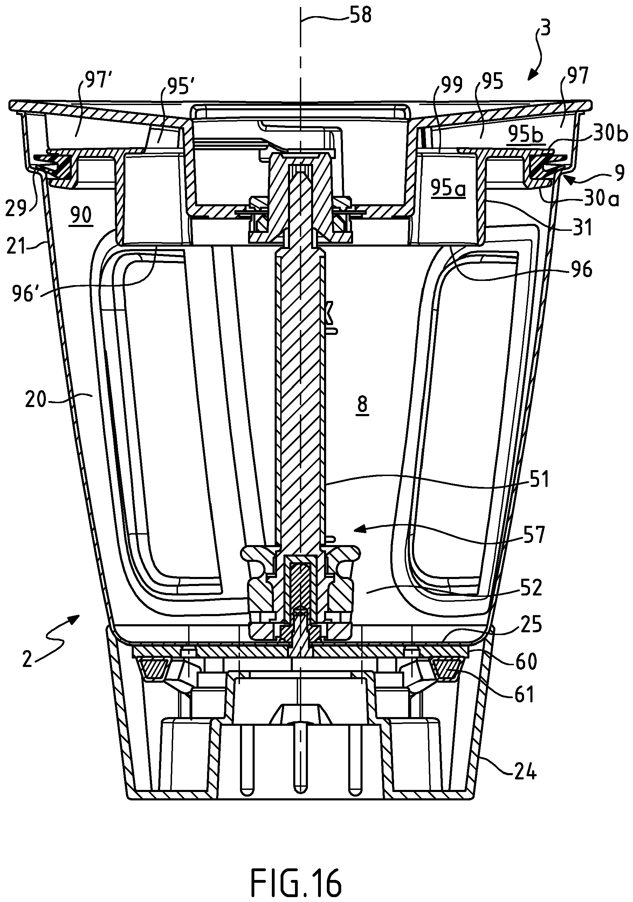

Le couvercle intermédiaire 3 présente un conduit d'évacuation 95 mettant en communication l'enceinte de travail 8 avec l'extérieur de l'appareil, tel que visible sur les figures 16 et 15. De préférence, la section du conduit d'évacuation reste en tout point supérieure à 1 cm², avec une largeur supérieure à 4 mm, pour éviter que les aliments ne bouchent le conduit d'évacuation. Le conduit d'évacuation 95 traverse le corps 30 du couvercle intermédiaire 3. Le couvercle intermédiaire 3 présente une paroi latérale déflectrice 31 s'étendant à distance de la paroi latérale intérieure 21 du récipient de travail 2, tel que visible sur la figure 16.

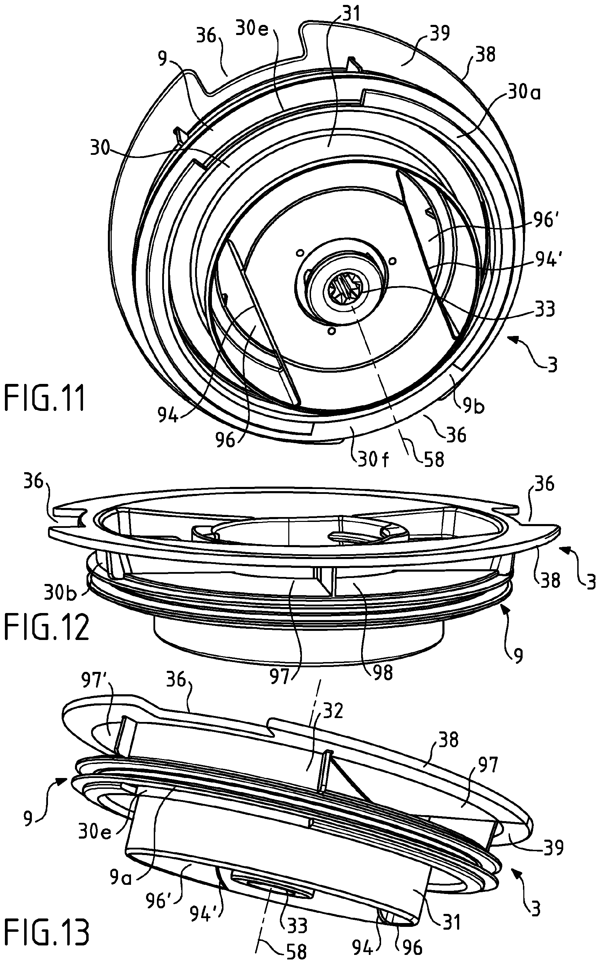

Plus particulièrement dans l'exemple de réalisation illustré sur les figures, la paroi latérale déflectrice 31 est annulaire et s'étend autour de l'axe de rotation 58, tel que bien visible sur les figures 11 et 13. La paroi latérale déflectrice 31 ménage un espace annulaire 90 avec la paroi latérale intérieure 21 du récipient de travail 2.

Le conduit d'évacuation 95 comporte une admission 96, visible sur les figures 11, 13 et 16, et une évacuation 97, visible sur les figures 12, 13 et 15.

Tel que bien visible sur la figure 16, l'admission 96 du conduit d'évacuation 95 communique avec l'enceinte de travail 8. La paroi latérale déflectrice 31 est agencée entre la paroi latérale intérieure 21 du récipient de travail 2 et l'admission 96. L'admission 96 est agencée entre la paroi latérale déflectrice 31 et l'axe de rotation 58.

La distance entre la paroi latérale intérieure 21 et la paroi latérale déflectrice 31 est supérieure à 5% de la distance entre la paroi latérale intérieure 21 et l'axe de rotation 58, et de préférence supérieure à 10% de la distance entre la paroi latérale intérieure 21 et l'axe de rotation 58.

Dans l'exemple de réalisation illustré sur les figures, la distance entre la paroi latérale intérieure 21 et la paroi latérale déflectrice 31 est supérieure à 20% de la distance entre la paroi latérale intérieure 21 et l'axe de rotation 58.

Plus particulièrement dans l'exemple de réalisation illustré sur les figures, l'admission 96 est ménagée dans la face inférieure du corps 30. L'admission 96 présente une ouverture inférieure. L'admission 96 est agencée au dessus du fond 25 du récipient de travail 2. L'admission 96 présente une échancrure latérale 94 agencée entre la paroi latérale déflectrice 31 et l'axe de rotation 58. Le conduit d'évacuation 95 présente ainsi une entrée protégée de manière périphérique par la paroi latérale déflectrice 31.

Tel que bien visible sur la figure 15, l'évacuation 97 du conduit d'évacuation 95 communique avec l'extérieur de l'appareil. Tel que montré sur la figure 15, l'évacuation 97 du conduit d'évacuation 95 débouche en regard de la paroi latérale intérieure 21 du récipient de travail 2 à distance d'un échappement 18 vers l'extérieur de l'appareil.

Plus particulièrement dans l'exemple de réalisation illustré sur les figures, l'évacuation 97 débouche dans une paroi latérale extérieure 32 du couvercle intermédiaire 3. Tel que visible sur la figure 12, l'évacuation 97 débouche sous la bordure extérieure 38. L'évacuation 97 s'étend sur plus du quart de la périphérie du couvercle intermédiaire 3. Pour une meilleure rigidité du couvercle intermédiaire 3 le conduit d'évacuation 95 peut être pourvu d'au moins une nervure interne 98. Le conduit d'évacuation 95 présente ainsi deux sorties au niveau de l'évacuation 97.

Plus particulièrement dans l'exemple de réalisation illustré sur les figures, le décrochement supérieur 26 du bord supérieur 23 du récipient de travail 2 ménage l'échappement 18. Tel que visible sur les figures 3 et 4, le décrochement supérieur 26 est adjacent au montant 10. Le décrochement supérieur 26 s'étend de part et d'autre du montant 10. L'échappement 18 est ménagé entre le récipient de travail 2 et le couvercle intermédiaire 3.

Tel que visible sur les figures 16 et 15, le conduit d'évacuation 95 présente une première portion 95a principalement verticale prolongeant l'admission 96 et une deuxième portion 95b principalement horizontale conduisant à l'évacuation 97. La première portion 95a communique avec la deuxième portion 95b par un passage 99.

Le joint annulaire 9 est monté autour du corps 30 entre une bordure d'appui inférieure 30a et une bordure d'appui supérieure 30b. L'évacuation 97 du conduit d'évacuation 95 débouche au dessus du joint annulaire 9.

Plus particulièrement dans l'exemple de réalisation illustré sur les figures, le joint annulaire 9 comporte une couronne 91 montée entre la bordure d'appui inférieure 30a et la bordure d'appui supérieure 30b. Le joint annulaire 9 comporte une lèvre annulaire 92. Ainsi le joint annulaire 9 est un joint à lèvre. La lèvre annulaire 92 est issue de la couronne 91. Selon une forme de réalisation préférée, le joint annulaire 9 comporte une autre lèvre annulaire 93. L'autre lèvre annulaire 93 est issue de la couronne 91. L'autre lèvre annulaire 93 s'étend au dessus de la lèvre annulaire 92. Ainsi la lèvre annulaire 92 et l'autre lèvre annulaire 93 sont superposées.

Tel que visible sur la figure 3, le joint annulaire 9 vient en appui sur le décrochement annulaire 29 du récipient de travail 2. Plus particulièrement, la lèvre annulaire 92 vient en appui sur le décrochement annulaire 29.

Tel que visible sur la figure 16, le couvercle intermédiaire 3 présente un autre conduit d'évacuation 95' mettant en communication l'enceinte de travail 8 avec l'extérieur de l'appareil. L'autre conduit d'évacuation 95' comporte une autre admission 96' communiquant avec l'enceinte de travail 8 et une autre évacuation 97' communiquant avec l'extérieur de l'appareil.

L'autre l'admission 96' est agencée entre la paroi latérale déflectrice 31 et l'axe de rotation 58. L'autre admission 96' présente une ouverture inférieure. L'axe de rotation 58 est agencé entre l'admission 96 et l'autre admission 96'. L'autre admission 96' présente une autre échancrure latérale 94' agencée entre la paroi latérale déflectrice 31 et l'axe de rotation 58.

L'autre évacuation 97' débouche en regard de la paroi latérale intérieure 21 à distance de l'échappement 18 vers l'extérieur de l'appareil. L'autre évacuation 97' débouche dans la paroi latérale extérieure 32. L'autre évacuation 97' débouche au dessus du joint annulaire 9. L'autre évacuation 97' débouche sous la bordure extérieure 38. Les échancrures périphériques 36 sont agencées entre l'évacuation 97 et l'autre évacuation 97'. L'axe de rotation 58 est agencé entre l'évacuation 97 et l'autre évacuation 97'.

Le couvercle intermédiaire 3 présente avantageusement une symétrie d'ordre 2 par rapport à l'axe de rotation 58.

Tel que bien visible sur les figures 11 et 13, la bordure d'appui inférieure 30a présente une échancrure latérale 30e. Tel que visible sur la figure 13, l'échancrure latérale s'étend entre l'évacuation 97 et l'autre évacuation 97'. La lèvre annulaire 92 s'étend au dessus de l'échancrure latérale 30e, ce qui permet une torsion d'une portion 9a du joint annulaire 9 s'étendant au dessus de ladite échancrure latérale 30e.

Tel que visible sur la figure 11, la bordure d'appui inférieure 30a présente une autre échancrure latérale 30f. L'autre échancrure latérale 30f est disposée à l'opposé de l'échancrure latérale 30e par rapport à l'axe de rotation 58. La lèvre annulaire 92 s'étend au dessus de l'autre échancrure latérale 30f, ce qui permet une torsion d'une autre portion 9b du joint annulaire 9 s'étendant au dessus de ladite autre échancrure latérale 30f.

Tel que montré sur la figure 3, ladite portion 9a du joint annulaire 9 est agencée entre l'échancrure latérale 30e et l'échappement 18 vers l'extérieur de l'appareil.

Le boîtier motorisé supérieur 4 loge un moteur électrique 40 entraînant un réducteur 41 prévu pour entraîner l'accessoire de travail rotatif 57 par l'intermédiaire de l'organe de transmission rotatif 33 du couvercle intermédiaire 3, tel que visible sur la figure 3. Le boîtier motorisé supérieur 4 comporte un capot supérieur 42 assemblé avec un capot inférieur 43. Le capot supérieur 42 forme un pommeau 45 prévu pour la préhension du boîtier motorisé supérieur 4. Tel que visible sur les figures 2 et 3, le moteur électrique 40 s'étend partiellement à l'intérieur du pommeau 45. Le pommeau 45 s'élève au dessus d'une partie circonférencielle 46 du boîtier motorisé supérieur 4, tel que visible sur les figures 1 à 4. Le capot inférieur 43 présente une partie centrale inférieure 48 proéminente.

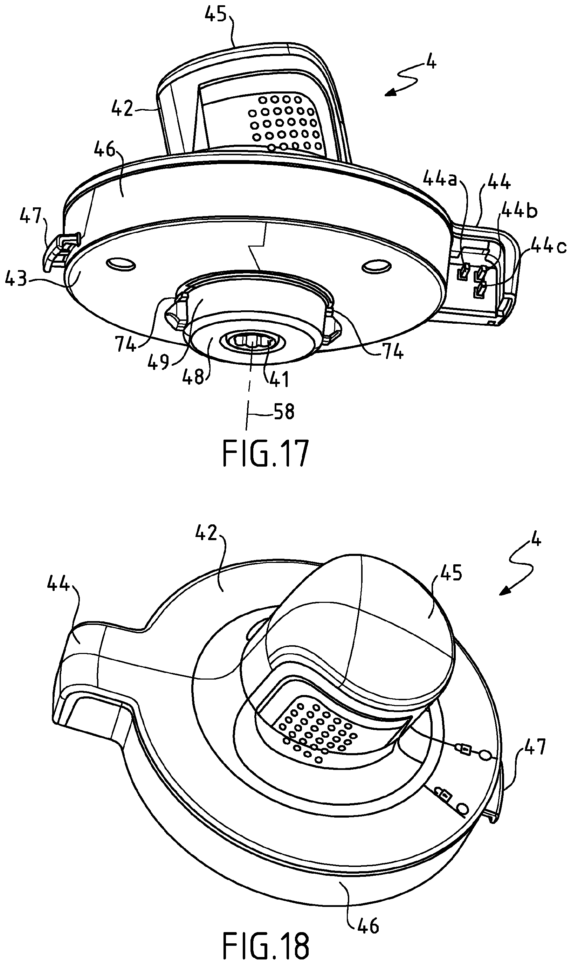

Tel que visible sur la figure 17, le boîtier motorisé supérieur 4 comporte trois broches latérales 44a, 44b, 44c logées en périphérie de la partie circonférentielle 46 du boîtier motorisé supérieur 4. Deux des broches latérales 44a, 44b, 44c sont prévues pour alimenter électriquement le moteur électrique 40, la troisième étant prévue pour mettre à la terre le moteur électrique 40. Les broches latérales 44a, 44b, 44c s'étendent transversalement sous un prolongement 44 du capot supérieur 42. Ainsi les broches latérales 44a, 44b, 44c sont agencées tangentiellement par rapport à l'ouverture supérieure du récipient de travail 2. Les broches latérales 44a, 44b, 44c s'étendent transversalement par rapport à l'axe de rotation 58. Deux des broches latérales 44a, 44b, 44c sont agencées à une distance identique de l'axe de rotation 58 mais à des niveaux différents, la troisième étant agencée au même niveau que la broche latérale la plus élevée, mais en étant plus proche de l'axe de rotation 58. Le prolongement 44 forme une corne et ménage une ouverture latérale et inférieure prévue pour le passage du connecteur électrique de motorisation 11 du montant 10.

Le boîtier motorisé supérieur 4 disposé sur le récipient de travail 2 peut être tourné sur le récipient de travail 2 pour amener le connecteur électrique de motorisation 11 en prise avec les broches latérales 44a, 44b, 44c du boîtier motorisé supérieur 4 et alimenter électriquement le boîtier motorisé supérieur 4.

Le boîtier motorisé supérieur 4 comporte une patte de verrouillage 47 agencée en périphérie de la partie circonférencielle 46. Plus particulièrement, la patte de verrouillage 47 est agencée à l'opposé du prolongement 44, tel que bien visible sur la figure 18.

Le boîtier motorisé supérieur 4 est verrouillé par baïonnette avec le couvercle intermédiaire 3 et peut occuper par rotation sur le couvercle intermédiaire 3 successivement une position déverrouillée et une position verrouillée. A cet effet le boîtier motorisé supérieur 4 présente des ergots extérieurs 74 prévus pour être engagés sous les collerettes internes 75 du couvercle intermédiaire 3. Les ergots extérieurs 74 sont agencées sur une paroi latérale 49 de la partie centrale inférieure 48 du boîtier motorisé supérieur 4.

Le boîtier motorisé supérieur 4 est verrouillé avec le montant 10 par rotation autour de l'axe de rotation 58. Le boîtier motorisé supérieur 4 est verrouillé avec le récipient de travail 2 par rotation autour de l'axe de rotation 58. Le boîtier motorisé supérieur 4 est verrouillé avec la poignée 80 du récipient de travail 2 par rotation autour de l'axe de rotation 58. La patte de verrouillage 47 du boîtier motorisé supérieur 4 est engagée dans un logement de verrouillage 81 de la poignée 80. Le boîtier motorisé supérieur 4 est verrouillé de manière opposée d'une part avec le montant 10 et d'autre part avec le récipient de travail 2, par rotation autour de l'axe de rotation 58.

L'appareil électroménager de préparation culinaire illustré sur les figures s'utilise et fonctionne de la manière suivante.

L'utilisateur dispose les aliments dans le récipient de travail 2 contenant l'accessoire de travail rotatif 57, met en place le couvercle intermédiaire 3 et le boîtier motorisé supérieur 4, verrouille le boîtier motorisé supérieur 4 sur le récipient de travail 2, et met en marche l'appareil, notamment le dispositif de chauffe électrique 6.

Une pression excessive, ou surpression, peut intervenir à l'intérieur de l'enceinte de travail 8, notamment si des aliments bouchent le conduit d'évacuation 95 et l'autre conduit d'évacuation 95'. En cas de surpression à l'intérieur de l'enceinte de travail 8, l'échancrure latérale 30e autorise une torsion de la portion 9a du joint annulaire 9 dans ladite échancrure latérale 30e pour créer une fuite hors de l'enceinte de travail 8. Du fait de cette torsion du joint annulaire 9, la lèvre annulaire 92 s'écarte de la paroi latérale intérieure 21 du récipient de travail 2 dans au moins une partie de ladite portion 9a. Cette disposition permet de réaliser une sécurité à la surpression de manière simple, économique et efficace. Une double sécurité peut être obtenue en mettant en oeuvre l'autre échancrure latérale 30f autorisant une torsion de l'autre portion 9b du joint annulaire 9 dans ladite autre échancrure latérale 30f pour créer une fuite hors de l'enceinte de travail 8.

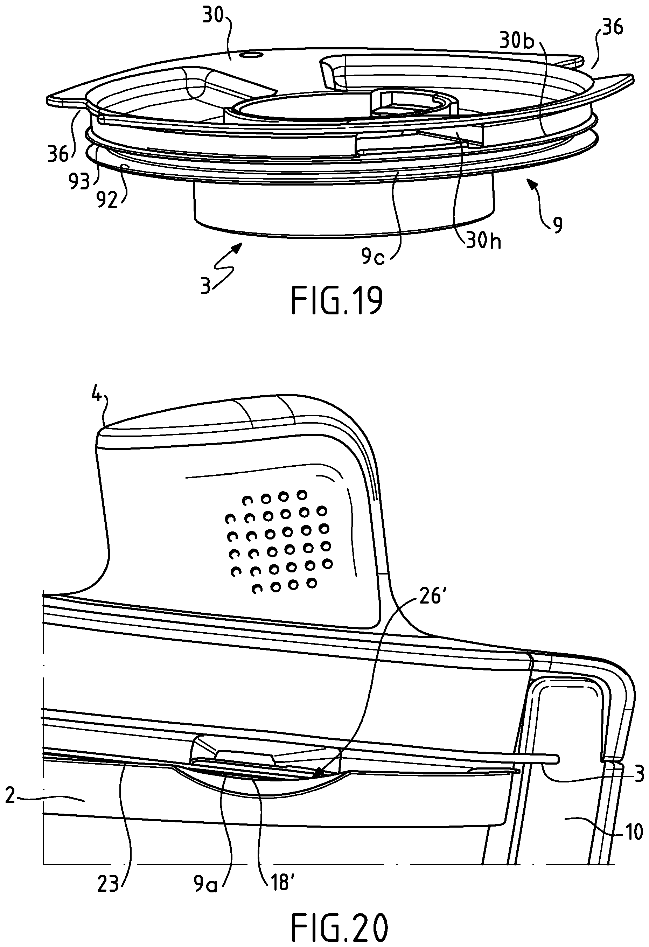

Le couvercle intermédiaire 3 illustré sur la figure 19 diffère du couvercle intermédiaire 3 illustré sur les figures 1 à 4 et 9 à 16 en ce que la bordure d'appui supérieure 30b présente une échancrure latérale 30h, et en ce que l'autre lèvre annulaire 93 s'étend en dessous de ladite échancrure latérale 30h, ce qui permet une torsion d'une portion 9c du joint annulaire 9 s'étendant en dessous de ladite échancrure latérale 30h. Tel que visible sur la figure 20, le bord supérieur 23 du récipient de travail 2 comporte un décrochement supérieur 26' formant un bec verseur, et ladite portion 9c est agencée en regard du décrochement supérieur 26' formant un échappement 18' vers l'extérieur de l'appareil. L'échappement 18' est décalé par rapport au montant 10.

A titre de variante, la bordure d'appui inférieure 30a et/ou la bordure d'appui supérieure 30b peuvent présenter une échancrure latérale 30e, 30h autorisant une torsion d'une portion 9a, 9c du joint annulaire 9 dans ladite échancrure latérale 30e, 30h pour créer une fuite hors de l'enceinte de travail 8 en cas de surpression à l'intérieur de l'enceinte de travail 8.

A titre de variante, le joint annulaire 9 ne présente pas nécessairement une autre lèvre annulaire 93.

A titre de variante, l'appareil électroménager de préparation culinaire selon l'invention ne comporte pas nécessairement une base 1 alimentant électriquement un dispositif de chauffe électrique 6 porté par le récipient de travail 2. Le dispositif de chauffe électrique 6 peut notamment être porté par la base 1, pour chauffer le récipient de travail 2 disposé sur la base 1.

A titre de variante, l'appareil électroménager de préparation culinaire selon l'invention ne comporte pas nécessairement une base 1 alimentant électriquement le boîtier motorisé supérieur 4. Le boîtier motorisé supérieur 4 peut notamment comporter ou recevoir un cordon d'alimentation électrique.

A titre de variante, le boîtier motorisé supérieur 4 n'est pas nécessairement verrouillé par rotation sur le récipient de travail 2.

La présente invention n'est nullement limitée à l'exemple de réalisation décrit et à ses variantes, mais englobe de nombreuses modifications dans le cadre des revendications.

## Revendications

1. Appareil électroménager de préparation culinaire chauffant comportant un récipient de travail (2), un accessoire de travail rotatif (57) disposé dans le récipient de travail (2), un boîtier motorisé supérieur (4) pour entraîner en rotation l'accessoire de travail rotatif (57) selon un axe de rotation (58), un dispositif de chauffe électrique (6) pour chauffer les aliments contenus dans le récipient de travail (2), un joint annulaire (9) comportant une lèvre annulaire (92) venant en appui périphérique à l'intérieur du récipient de travail (2), le boîtier motorisé supérieur (4) étant verrouillé sur le récipient de travail (2), **caractérisé en ce que** le récipient de travail (2) porte un couvercle intermédiaire (3) comportant un corps (30), **en ce qu'**une enceinte de travail (8) est définie par le récipient de travail (2) et le couvercle intermédiaire (3), **en ce que** le joint annulaire (9) est monté autour du corps (30) entre une bordure d'appui inférieure (30a) et une bordure d'appui supérieure (30b), et **en ce que** la bordure d'appui inférieure (30a) et/ou la bordure d'appui supérieure (30b) présente(nt) une échancrure latérale (30e, 30h) autorisant une torsion d'une portion (9a, 9c) du joint annulaire (9) dans l'échancrure latérale (30e, 30h) pour créer une fuite hors de l'enceinte de travail (8) en cas de surpression à l'intérieur de l'enceinte de travail (8).

2. Appareil électroménager de préparation culinaire chauffant selon la revendication 1, **caractérisé en ce que** ladite portion (9a) du joint annulaire (9) est agencée entre l'échancrure latérale (30e) et un échappement (18) vers l'extérieur de l'appareil.

3. Appareil électroménager de préparation culinaire chauffant selon la revendication 2, **caractérisé en ce que** l'échappement (18) est ménagé entre le récipient de travail (2) et le couvercle intermédiaire (3).

4. Appareil électroménager de préparation culinaire chauffant selon l'une des revendications 2 ou 3, **caractérisé en ce que** le récipient de travail (2) présente un bord supérieur (23) présentant un décrochement supérieur (26) ménageant l'échappement (18).

5. Appareil électroménager de préparation culinaire chauffant selon l'une des revendications 1 à 4, **caractérisé en ce que** le joint annulaire (9) comporte une autre lèvre annulaire (93) s'étendant au dessus de la lèvre annulaire (92).

6. Appareil électroménager de préparation culinaire chauffant selon l'une des revendications 1 à 5, **caractérisé en ce que** la bordure d'appui inférieure (30a) et/ou la bordure d'appui supérieure (30b) présente une autre échancrure latérale (30f) autorisant une torsion d'une autre portion (9b) du joint annulaire (9) dans l'autre échancrure latérale (30f) pour créer une autre fuite hors de l'enceinte de travail (8) en cas de surpression à l'intérieur de l'enceinte de travail (8).

7. Appareil électroménager de préparation culinaire chauffant selon la revendication 6, **caractérisé en ce que** l'autre échancrure latérale (30f) est disposée à l'opposé de l'échancrure latérale (30e) par rapport à l'axe de rotation (58).

8. Appareil électroménager de préparation culinaire chauffant selon l'une des revendications 1 à 7, **caractérisé en ce que** le couvercle intermédiaire (3) présente un conduit d'évacuation (95) mettant en communication l'enceinte de travail (8) avec l'extérieur de l'appareil.

9. Appareil électroménager de préparation culinaire chauffant selon la revendication 8, **caractérisé en ce que** le conduit d'évacuation (95) comporte une admission (96) communiquant avec l'enceinte de travail (8) et une évacuation (97) communiquant avec l'extérieur de l'appareil, et **en ce que** l'évacuation (97) débouche au dessus du joint annulaire (9).

10. Appareil électroménager de préparation culinaire chauffant selon l'une des revendications 1 à 9, **caractérisé en ce qu'**il comporte une base (1) recevant le récipient de travail (2).

11. Appareil électroménager de préparation culinaire chauffant selon la revendication 10, **caractérisé en ce que** le dispositif de chauffe électrique (6) est porté par le récipient de travail (2) et **en ce que** la base (1) comporte un connecteur électrique de chauffe (15) pour alimenter électriquement le dispositif de chauffe électrique (6) lorsque le récipient de travail (2) est disposé sur la base (1).

12. Appareil électroménager de préparation culinaire chauffant selon l'une des revendications 10 ou 11, **caractérisé en ce que** la base (1) comporte un montant (10) présentant un connecteur électrique de motorisation (11) pour alimenter électriquement le boîtier motorisé supérieur (4).

13. Appareil électroménager de préparation culinaire chauffant selon les revendications 4 et 12, **caractérisé en ce que** le décrochement supérieur (26) est adjacent au montant (10), ou **en ce que** le décrochement supérieur (26) s'étend de part et d'autre du montant (10).

14. Appareil électroménager de préparation culinaire chauffant selon l'une des revendications 1 à 13, **caractérisé en ce que** le couvercle intermédiaire (3) porte un organe de transmission rotatif (33) entrainé en rotation par le boîtier motorisé supérieur (4) et entraînant en rotation l'accessoire de travail rotatif (57) disposé dans le récipient de travail (2).

15. Appareil électroménager de préparation culinaire chauffant selon l'une des revendications 1 à 14, **caractérisé en ce que** le récipient de travail (2) présente un fond (25) et comporte un organe de centrage (28) s'élevant à partir du fond (25), et **en ce que** l'accessoire de travail rotatif (57) est monté sur l'organe de centrage (28).

## Patentansprüche

1. Elektrisches, beheiztes Haushaltsgerät zur Nahrungsmittelzubereitung, aufweisend einen Arbeitsbehälter (2), ein in dem Arbeitsbehälter (2) angeordnetes drehbares Arbeitszubehör (57), ein oberes Motorgehäuse (4), um das drehbare Arbeitzubehör (57) um eine Drehachse (58) in Drehung anzutreiben, eine elektrische Heizung (6), um die in dem Arbeitsbehälter (2) enthaltenen Lebensmittel zu erwärmen, eine ringförmige Dichtung (9), die eine ringförmige Lippe (92) aufweist, die mit ihrem Umfang im Inneren des Arbeitsbehälters (2) anliegt, wobei das obere Motorgehäuse (4) an dem Arbeitsbehälter (2) verriegelt ist, **dadurch gekennzeichnet, dass** der Arbeitsbehälter (2) einen Zwischendeckel (3) trägt, der einen Körper (30) aufweist, dass eine Arbeitskammer (8) durch den Arbeitsbehälter (2) und den Zwischendeckel (3) definiert ist, dass die ringförmige Dichtung (9) um den Körper (30) herum zwischen einer unteren Auflageumrandung (30a) und einer oberen Auflageumrandung (30b) angebracht ist, und dass die untere Auflageumrandung (30a) und / oder die obere Auflageumrandung (30b) einen seitlichen Schlitz (30e, 30h) vorweist bzw. vorweisen, der eine Verdrehung eines Abschnitts (9a, 9c) der ringförmigen Dichtung (9) in dem seitlichen Schlitz (30e, 30h) ermöglicht, um ein Leck aus der Arbeitskammer (8) im Falle eines Überdrucks im Inneren der Arbeitskammer (8) zu erzeugen.

2. Elektrisches, beheiztes Haushaltsgerät zur Nahrungsmittelzubereitung nach Anspruch 1, **dadurch gekennzeichnet, dass** der Abschnitt (9a) der ringförmigen Dichtung (9) zwischen dem seitlichen Schlitz (30e) und einem Auslass (18) zur Außenseite des Geräts angeordnet ist.

3. Elektrisches, beheiztes Haushaltsgerät zur Nahrungsmittelzubereitung nach Anspruch 2, **dadurch gekennzeichnet, dass** der Auslass (18) zwischen dem Arbeitsbehälter (2) und dem Zwischendeckel (3) ausgebildet ist.

4. Elektrisches, beheiztes Haushaltsgerät zur Nahrungsmittelzubereitung nach einem der Ansprüche 2 oder 3, **dadurch gekennzeichnet, dass** der Arbeitsbehälter (2) eine obere Umrandung (23) vorweist, die einen oberen Absatz (26) vorweist, in dem der Auslass (18) ausgebildet ist.

5. Elektrisches, beheiztes Haushaltsgerät zur Nahrungsmittelzubereitung nach einem der Ansprüche 1 bis 4, **dadurch gekennzeichnet, dass** die ringförmige Dichtung (9) eine weitere ringförmige Lippe (93) aufweist, die sich über der ringförmigen Lippe (92) erstreckt.

6. Elektrisches, beheiztes Haushaltsgerät zur Nahrungsmittelzubereitung nach einem der Ansprüche 1 bis 5, **dadurch gekennzeichnet, dass** die untere Auflageumrandung (30a) und / oder die obere Auflageumrandung (30b) einen weiteren seitlichen Schlitz (30f) vorweisen, der eine Verdrehung eines anderen Abschnitts (9b) der ringförmigen Dichtung (9) in dem anderen seitlichen Schlitz (30f) ermöglicht, um ein weiteres Leck aus der Arbeitskammer (8) im Falle eines Überdrucks im Inneren der Arbeitskammer (8) zu erzeugen.

7. Elektrisches, beheiztes Haushaltsgerät zur Nahrungsmittelzubereitung nach Anspruch 6, **dadurch gekennzeichnet, dass** der andere seitliche Schlitz (30f) gegenüber dem seitlichen Schlitz (30e) bezüglich der Drehachse (58) angeordnet ist.

8. Elektrisches, beheiztes Haushaltsgerät zur Nahrungsmittelzubereitung nach einem der Ansprüche 1 bis 7, **dadurch gekennzeichnet, dass** der Zwischendeckel (3) eine Auslassleitung (95) vorweist, der die Arbeitskammer (8) mit der Außenseite des Geräts verbindet.

9. Elektrisches, beheiztes Haushaltsgerät zur Nahrungsmittelzubereitung nach Anspruch 8, **dadurch gekennzeichnet, dass** die Auslassleitung (95) einen mit der Arbeitskammer (8) in Verbindung stehenden Einlass (96) und einen mit der Außenseite des Geräts in Verbindung stehenden Auslass (97) aufweist, und dass der Auslass (97) oberhalb der ringförmigen Dichtung (9) mündet.

10. Elektrisches, beheiztes Haushaltsgerät zur Nahrungsmittelzubereitung nach einem der Ansprüche 1 bis 9, **dadurch gekennzeichnet, dass** es eine Basis (1) aufweist, die den Arbeitsbehälter (2) aufnimmt.

11. Elektrisches, beheiztes Haushaltsgerät zur Nahrungsmittelzubereitung nach Anspruch 10, **dadurch gekennzeichnet, dass** die elektrische Heizvorrichtung (6) von dem Arbeitsbehälter (2) getragen wird, und dass die Basis (1) einen elektrischen Heizungsanschluss (15) zur elektrischen Versorgung der elektrischen Heizvorrichtung (6) aufweist, wenn der Arbeitsbehälter (2) auf der Basis (1) angeordnet ist.

12. Elektrisches, beheiztes Haushaltsgerät zur Nahrungsmittelzubereitung nach einem der Ansprüche 10 oder 11, **dadurch gekennzeichnet, dass** die Basis (1) einen Pfosten (10) aufweist, der einen Elektromotoranschluss (11) zur elektrischen Versorgung des oberen motorisierten Gehäuses (4) vorweist.

13. Elektrisches, beheiztes Haushaltsgerät zur Nahrungsmittelzubereitung nach den Ansprüchen 4 und 12, **dadurch gekennzeichnet, dass** der obere Absatz (26) an den Pfosten (10) angrenzt, oder dass sich der obere Absatz (26) auf beiden Seiten des Pfostens (10) erstreckt.

14. Elektrisches, beheiztes Haushaltsgerät zur Nahrungsmittelzubereitung nach einem der Ansprüche 1 bis 13, **dadurch gekennzeichnet, dass** der Zwischendeckel (3) ein drehbares Übertragungselement (33) trägt, das von dem oberen Motorgehäuse (4) in Drehung angetrieben wird und das in dem Arbeitsbehälter (2) angeordnete drehbare Arbeitzubehör (57) in Drehung antreibt.

15. Elektrisches, beheiztes Haushaltsgerät zur Nahrungsmittelzubereitung nach einem der Ansprüche 1 bis 14, **dadurch gekennzeichnet, dass** der Arbeitsbehälter (2) einen Boden (25) vorweist und ein von dem Boden (25) aufragendes Zentrierelement (28) aufweist, und dass das drehbare Arbeitszubehör (57) an dem Zentrierelement (28) angebracht ist.

## Claims

1. Heating electrical food preparation appliance comprising a working container (2), a rotary working accessory (57) arranged in the working container (2), an upper motor-driven housing (4) for rotating the rotary working accessory (57) about a rotational axis (58), an electrical heating device (6) for heating the food contained in the working container (2), an annular seal (9) comprising an annular lip (92) peripherally bearing inside the working container (2), the upper motor-driven housing (4) being locked onto the working container (2), **characterised in that** the working container (2) supports an intermediate lid (3) comprising a body (30), **in that** a working chamber (8) is defined by the working container (2) and the intermediate lid (3), **in that** the annular seal (9) is mounted around the body (30) between a lower bearing edge (30a) and an upper bearing edge (30b), and **in that** the lower bearing edge (30a) and/or the upper bearing edge (30b) has or have a side notch (30e, 30h) allowing one portion (9a, 9c) of the annular seal (9) to be twisted in the side notch (30e, 30h) in order to create a leak to the outside of the working chamber (8) in the event of excess pressure inside the working chamber (8).

2. Heating electrical food preparation appliance according to claim 1, **characterised in that** said portion (9a) of the annular seal (9) is arranged between the side notch (30e) and a vent (18) leading to the outside of the appliance.

3. Heating electrical food preparation appliance according to claim 2, **characterised in that** the vent (18) is made between the working container (2) and the intermediate lid (3).

4. Heating electrical food preparation appliance according to either claim 2 or claim 3, **characterised in that** the working container (2) has an upper rim (23) having an upper discontinuity (26) housing the vent (18).

5. Heating electrical food preparation appliance according to one of claims 1 to 4, **characterised in that** the annular seal (9) comprises another annular lip (93) extending above the annular lip (92).

6. Heating electrical food preparation appliance according to one of claims 1 to 5, **characterised in that** the lower bearing edge (30a) and/or the upper bearing edge (30b) has another side notch (30f) allowing another portion (9b) of the annular seal (9) to be twisted in the other side notch (30f) in order to create another leak to the outside of the working chamber (8) in the event of excess pressure inside the working chamber (8).

7. Heating electrical food preparation appliance according to claim 6, **characterized in that** the other side notch (30f) is arranged opposite the side notch (30e) in relation to the rotational axis (58).

8. Heating electrical food preparation appliance according to one of claims 1 to 7, **characterised in that** the intermediate lid (3) has an exhaust duct (95) placing the working chamber (8) in communication with the outside of the appliance.

9. Heating electrical food preparation appliance according to claim 8, **characterised in that** the exhaust duct (95) comprises an intake (96) communicating with the working chamber (8) and an exhaust (97) communicating with the outside of the appliance, and **in that** the exhaust (97) opens out above the annular seal (9).

10. Heating electrical food preparation appliance according to one of claims 1 to 9, **characterised in that** it comprises a base (1) receiving the working container (2).

11. Heating electrical food preparation appliance according to claim 10, **characterised in that** the electrical heating device (6) is supported by the working container (2) and **in that** the base (1) comprises an electrical heating connector (15) for powering the electric heating device (6) when the working container (2) is arranged on the base (1).

12. Heating electrical food preparation appliance according to either claim 10 or claim 11, **characterised in that** the base (1) comprises an upright (10) having an electrical motor connector (11) for powering the upper motor-driven housing (4).

13. Heating electrical food preparation appliance according to claims 4 and 12, **characterised in that** the upper discontinuity (26) is adjacent to the upright (10), or **in that** the upper discontinuity (26) extends along either side of the upright (10).

14. Heating electrical food preparation appliance according to one of claims 1 to 13, **characterised in that** the intermediate lid (3) supports a rotary transmission member (33) driven in rotation by the upper motor-driven housing (4) and rotating the rotary working accessory (57) arranged inside the working container (2).

15. Heating electrical food preparation appliance according to one of claims 1 to 14, **characterised in that** the working container (2) has a bottom (25) and comprises a centring member (28) extending up from the bottom (25), and **in that** the rotary working accessory (57) is mounted on the centring member (28).
